# EUROPEAN PATENT SPECIFICATION

(11) **EP 2 372 861 B1**
(45) Date of publication and mention of the grant of the patent: **30.01.2013**
(21) Application number: 10003643.3
(22) Date of filing: 01.04.2010
(51) Int. Cl.: H02J 3/14, G06F 1/26

(54) **Data center management unit with dynamic load balancing**
Rechenzentrumsverwaltungseinheit mit dynamischem Lastausgleich
Unité de gestion du centre de données avec équilibrage des charges dynamiques

(43) Date of publication of application: 05.10.2011
(73) Proprietor: Racktivity NV, 9080 Lochristi (BE)
(72) Inventor: Ingels, Wilbert, 1741 Ternat (Wambeek) (BE); Vinken, Niko, 8570 Anzegem (BE)
(74) Representative: Plas, Axel Ivo Michel

(56) References cited:
- US-A1- 2003 056 125
- US-A1- 2005 071 092
- "Power quality" Wikipedia 4 February 2010 (2010-02-04), XP002597607 Retrieved from the Internet: URL:http://en.wikipedia.org/w/index.php?ti tle=Power_quality&oldid=341986350 [retrieved on 2010-08-17]

## Description

### Field of the Invention

The present invention generally relates to power management in data centers and server installations. In particular, the present invention concerns a data center management unit (DCMU) or smart power distribution unit (PDU) with redundant power inlets, i.e. two or more power inlets connected to two or more feeds, and improved load balancing.

Data centers represent hosting facilities that typically host a few tens up to thousands of computers, e.g. servers, routers, switches, etc. These computers are organized in racks or cabinets. As a result of for instance excessive power consumption, temperature increase in the data center room, short-circuited or defective electronics, etc., a power source may become unstable or even fail. Plural computers, racks or even an entire data center may be victim of such a power failure. The power failure represents a disaster for the data center hosting company, its clients and the end users that are left without service during the power interruption. To reduce service outage resulting from a power supply failure data centers are usually furnished with two or more redundant power feeds, e.g. an A-feed and B-feed with equal or different phases, protected or unprotected.

### Background of the Invention

Power has become one of the most difficult and expensive items to manage in data centers. Up to 40 % of data center power supplies are not working optimally. These power supplies consume excessive power resulting in heating, malfunctioning devices, and finally occasional or regular power shutdowns. Networks are out of control after a power failure in the data center and often customers are aware of the data center problem before the data center's operator. In 50 % of the cases, the data center operator is informed by the customer on a power shutdown that has occurred in the data center. Moreover, the data center operator typically has difficulties to remote control the switches, airco's, or other electronic devices in the data center. As a consequence, recovery from a disaster where several computers in the data center are affected is slow because intervention by technicians in the data center is required.

As opposed to a dumb power distribution unit (PDU) that has no instrumentation and is not manageable, the present invention concerns a smart power distribution unit or data center management unit (DCMU) that can be metered, is equipped with one or more displays, and can be switched, i.e. individual outlets can be switched on or off remotely. Smart PDUs typically feature means for remote access such as RS-232 serial data ports, external buses such as USB (Universal Serial Bus), or a computer network controller accessible through a network protocol such as Telnet, SSH (Secure Shell), SNMP (Simple Network Management Protocol), ICQ ("I seek you"), or through a web portal. This way, the data center administrator is enabled to access the smart PDU from a remote terminal or interface in order to turn on/off power outlets, to schedule power shutdowns, to control the load, etc.

In order to reduce the number of power feed failures, the prior art suggests three types of solutions that rely on redundant power feeds and ATS functionality and that can be categorized as follows: external Automated Transfer Switches (ATS), integrated Automated Transfer Switches (ATS), and integrated Automated Transfer Switches (ATS) with load balancing.

APC's Automatic Transfer Switch AP7722 is an example of the first category of prior art solutions. The product sheet of APC's AP772 can be retrieved from the Internet via the following URL:
http://apc.hd.nl/files/prod₋files/0048-AP7722₋Product₋Sheet.pdf
The external ATS from APC is a high availability switch with two power feeds. The ATS supplies power from the first or primary power feed and is set to automatically switch and draw power from the secondary power source as soon as the first power feed becomes unavailable.

At any point in time, an external ATS supplies the DCMU and all rack equipment with power from a single source. Only when this source fails the ATS will switch to another power source. It is in other words impossible to balance the load over the available redundant power sources, as a result of which power outages will occur more frequently (higher risk for overloading the power source) and each power outage will affect all rack equipment.

In US 5,821,636 entitled "Low Profile, Redundant Source Power Distribution Unit" a PDU with integrated ATS, i.e. the second category of prior art solutions, is disclosed. The PDU has a first and second power input and a switch for distributing and outputting the power from either the first power supply or the second power supply to the outlet connectors that feed the servers.

Although the second power input and integrated ATS enable to take-over the power supply needs of the servers in case the main, uninterruptable power supply needs to be repaired, swapped out or upgraded, the PDU with integrated ATS known from US 5,821,636 has drawbacks that are comparable to the external ATS described here above. At any point in time, the servers or computers are all powered by either the first or second power supply. Load balancing between the available power sources is not possible. In addition, switching between the first and second power supply involves micro-interruptions that may cause server outages.

Tripp Lite has introduced a PDU with integrated ATS and on-board ATS processor. A description of this PDU can be found at URL:
http://www.tripplite.com/shared/product-pages/en/PDUMH1 5AT.pdf
If the primary power source becomes unstable or fails, the ATS will switch over to the secondary power source until the primary input is restored and stable. The on-board ATS processor constantly evaluates the power quality on both input sources to prevent transfer to the secondary source when the latter is unavailable or of lower quality than the primary source.

Although the ATS processor avoids unnecessary transfers between the first and second power feed, it still does not enable load balancing across the power feeds.

A more advanced PDU with integrated ATS is the Sentry Fail-Safe Power Tower XL. This PDU with integrated ATS and load balancing belongs to the third category of prior art solutions and is described in the brochure that is downloadable via the following URL:
http://www.servertech.com/uploads/datasheets/0000/0044/Fail-SafePTXLPTXM-HF16.pdf
In this PDU, the A in-feed powers eight outlets and the B in-feed also powers eight outlets. In case the A in-feed goes down, the eight outlets are switched to the B in-feed in fewer than 18 milliseconds by the integrated ATS. As a result, the B in-feed shall power 16 outlets until the A in-feed re-appears.

Whereas the known Sentry PDU with integrated ATS and load balancing allows distributing the outlets across the redundant power supply circuits, the distribution is static and does not account for the load induced by the different servers, the priority or criticality of the servers, the stability of the power feeds, etc. The load induced by the eight servers connected to the A in-feed may differ significantly from the load induced by the eight servers connected to the B in-feed. The sum of the loads induced by the 16 servers may exceed the capacity of the B in-feed as a result of which also the B in-feed shall go down. Servers running critical applications may be connected to the in-feed with lowest stability and vice-versa.

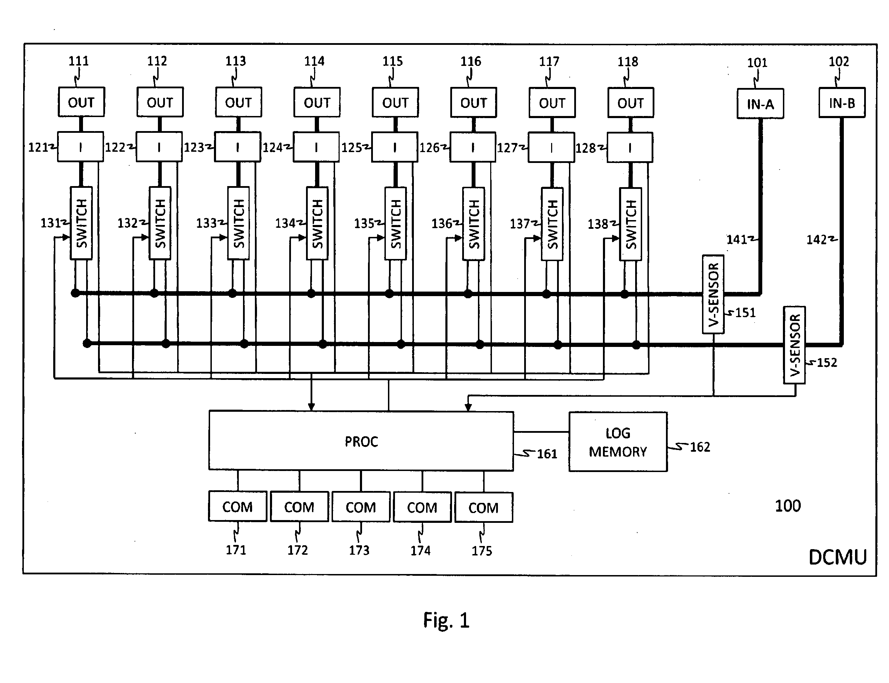

United States Patent Application US 2005/0071092 A1 entitled "Load Management in a Power System" describes a power supply system with load balancing for a data center with servers or computers that have at least two power supplies for redundancy. In Fig. 1 of US 2005/0071092, each server or computer 150a ... 150l has a first power supply and a second power supply that are used to respectively draw X % of the required power from a first PDU and (1-X) % of the required power from another PDU. This is explained for instance in paragraph [0022], lines 9-15 of US 2005/0071092. Each of the PDUs, e.g. PDU 140a, further receives power from two redundant power feeds, i.e. UPS 130a and UPS 130b in case of PDU 140a. Also here, X % of the required power will be drawn from the first power feed whereas (1-X) % of the required power will be drawn from the second power feed. This is explained in paragraph [0022], lines 1-9 of US 2005/0071092. The system known from US 2005/0071092 in other words implements redundancy at two levels: at the level of the power feeds, and at the level of the servers (redundant power supply inlets). The system known from US 2005/0071092 further has a load manager 160 that implements load balancing between the power feeds UPS 130a ... UPS 130d, and between the PDUs 140a ... 140f. Thereto, the parameter X is made controllable by the load manager 60, as well in the PDUs as in the servers. The load manager 160 in other words can control servers to draw more power from a particular PDU and less power from another PDU. The load manager 160 similarly can control the percentage of power that the PDUs 140a ... 140f draw from a first power feed or UPS and the percentage drawn from a second UPS, since each PDU is connected to two power feeds UPS 130a - UPS 130d.

The system known from US 2005/0071092 requires dual power supply servers or computers. Such servers or computers non-standard, expensive, require redundant power cabling between the PDUs and servers that will increase wiring complexity in each rack, an they require an agent that communicates with the load manager and controls drawing power from its two power supplies according to the ratio X imposed by the load manager. The system known from US 2005/0071092 consequently cannot use standard, cheap, available single power supply servers or computers. The system known from US 2005/0071092 is further limited in that it does not enable to switch individual servers from a first power feed to a second power feed for load balancing reasons. It is for instance not possible to switch server 150a to power feed 130a while switching server 150b to power feed 130b. As a consequence, it is also not possible to switch servers running more critical applications towards a more stable power feed. The load manager 160 can at best control the parameter X, i.e. the percentage of power that servers draw from their first/second power supply, and the percentage of power that room PDUs draw from their first/second power supply, as a result of which the power supply of a group of servers is always controlled simultaneously.

It is an objective of the present invention to disclose a data center management unit (DCMU) or smart PDU that overcomes the shortcomings and drawbacks mentioned here above in relation to the prior art solutions. More particularly, it is an objective to disclose a data center management unit with redundant power feeds that does not impose unbalanced loads on the power feeds, and that enables to maintain balanced phases in case the redundant power feeds represent different phases of a multi-phase power source. It is a further objective to disclose a data center management unit with redundant power feeds that intelligently takes into account criticality of servers and applications. It is a further objective to disclose a data center management unit that avoids switching computers or servers to a power feed if the aggregate load imposed by those computers or servers exceeds the capacity of the power feed.

### Summary of the Invention

According to the invention, the above objectives are realized by a data center management unit for managing and controlling power distribution to computers in a data center as defined by claim 1, the data center management unit comprising:
- a first power inlet for connectivity to a first power feed;
- a second power inlet for connectivity to a second power feed;
- a plurality of power outlets for providing power to respective ones of the computers;
- a processor; and
- a plurality of power switches each having a first input coupled to the first power inlet and a second input coupled to the second power inlet, the plurality of power switches having outputs coupled to respective ones of the plurality of power outlets;
- the processor being adapted to control the plurality of power switches for dynamically switching individual power outlets of the plurality of power outlets between the first power inlet and the second power inlet or vice versa, and for dynamically switching off individual power outlets of the plurality of power outlets.

Thus, the invention concerns a DCMU or smart PDU with integrated ATS and processor that dynamically switches individual outlet ports between the redundant power feeds, i.e. two or more power feeds, and/or that dynamically switches off individual outlet ports. The redundant power feeds may be single phase feeds - the feeds have the same phase - or they may be multi-phase feeds if the A and B feeds have different phases. This way, the processor shall maintain balance between the redundant power feeds and/or the different phases in case the redundant power feeds represent different phases of a multi-phase power source. An important advantage is that redundancy will be guaranteed. The second power feed can take over when the first power feed becomes unstable or fails, and vice versa. The processor shall avoid that one power feed becomes overloaded by switching off certain ports, thereby reducing the risk for outages or instability. The processor can distribute the ports amongst the redundant power feeds taking into account various parameters such as the criticality of the servers or applications running thereon, SLA commitments, cost of downtime, actual load imposed on the power feeds, etc. In case of maintenance, a predicted or a scheduled power down of one of the feeds, the ports can be transferred to the redundant power feed sequentially. Less critical servers may be switched off such that only important or more critical servers are transferred to the redundant power feed. The power switches preferably are intelligent switches that switch off a port at zero crossing of the current and switch on a port at zero crossing of the voltage. In summary, the bank of power switches and intelligent processor guarantees a balanced load on the redundant power feeds or phases, and protects critical servers or apptications.

In addition to a data center management unit with dynamic load balancing as defined by claim 1, the invention concerns a corresponding method managing and controlling power distribution to computers in a data center through a data center management unit, as defined by claim 14, the method comprising:
- connecting a first power inlet of the data center management unit to a first power feed;
- connecting a second power inlet of the data center management unit to a second power feed;
- connecting the computers to a plurality of power outlets for providing power to respective ones of the computers; and
- dynamically switching individual power outlets of the plurality of power outlets between the first power inlet and the second power inlet or vice versa, and dynamically switching off individual power outlets of the plurality of power outlets.

According to an optional aspect of the data center management unit, defined by claim 2, the processor is adapted to control the plurality of power switches based on quality of the first power feed and second power feed.

Power quality monitoring in electricity distribution systems is generally known, for instance from Wikipedia, definition of "Power quality" of 4 February 2010.

As is further indicated by claim 3, the quality of the first power feed and second power feed may depend on one or more of the following parameters:
- individual load of the first power feed and second power feed;
- variation in time of the voltage of the first power feed and second power feed;
- total harmonic distortion of the voltage of the first power feed and second power feed;
- the power factor of each individual load;
- current of each individual load;
- variation in time of the current of each individual load on the first power feed and the second power feed;
- total harmonic distortion of the current of each individual load on the first power feed and the second power feed;
- the power factor of the first power feed and the second power feed;
- total current on the first power feed and the second power feed;
- variation in time of the total current on the first power feed and the second power feed;
- total harmonic distortion of the total current on the first power feed and the second power feed;
- number of micro-interruptions of the first power feed and second power feed;
- length of micro-interruptions of the first power feed and second power feed;
- number of outages of the first power feed and second power feed;
- connectivity of the first power feed and second power feed to an Uninterruptable Power Source (UPS);
- ratio of actual load versus maximum allowable load of the first power feed and second power feed.

Thus, depending on various measurable parameters such as the actual load on the feeds, the ratio of the actual load versus the capacity of the feeds, the variation in time and THD of the voltages, power factors, the individual currents of the loads or total currents on each power feed, the occurrence and duration of micro-interruptions and outages, and the presence of a UPS or not, the processor shall dynamically allocate servers to feeds and - if necessary - switch off servers. Typically, servers that run more critical applications or that have higher priorities shall be allocated to power feeds with a higher quality factor. Servers that run less critical applications or that have a lower priority shall be allocated to a power feed with lower quality, or shall be switched off preventively in case a power feeds risks to go down.

An optional aspect of the data center management unit according to the invention, defined by claim 4, is that:
- the processor is adapted to receive information indicative for priorities associated with the computers; and
- the processor is further adapted to control the plurality of power switches based on the priorities of the computers.

Thus, priorities may be associated with each of the computers or servers connected to the DCMU. The processor shall distribute the ports over the redundant power feeds taking into account these priorities. High priority servers will be assigned to a more stable or better protected power feed whereas low priority servers will be allocated to a power feed that is less stable and/or unprotected. Also in case of transfers between the power feeds, e.g. in case of a failure or increasing instability of one of the power feeds or in case of unbalanced loads on the power feeds, the processor shall take into account the server priorities in its decision which ports to transfer to which power feed. Ports whereto less critical servers are connected may be switched off or transferred to the instable power feed, whereas high priority servers will be transferred to the most stable power feed, whereby a hysteresis is taking into account to avoid that a server is permanently switched from one feed to another. The server priorities may be configured by the data center operator the first time a server is connected and operated. The server priorities may be dynamically reconfigurable through the data center operator interface.

According to a further optional feature defined by claim 5:
- the data center management unit may comprise a plurality of current sensors coupled to respective ones of the plurality of power outlets for sensing current loads induced by the computers; and
- the processor may further be adapted to control the plurality of power switches based on the current load induced by the computers.

Thus, current sensors in the DCMU may provide accurate and instant information to the processor with respect to the actual load imposed by the different servers or computers. This information may be exploited by the processor to dynamically transfer output ports between the redundant power feeds thereby maintaining load balance between the power feeds. The information is also useful for the processor in its decision which output ports to switch off.

Also optionally, as defined by claim 6, in an embodiment of the data center management unit according to the current invention:
- the first power feed and the second power feed may represent different phases of a multi-phase power supply; and
- the processor may further be adapted to control the plurality of power switches based on the balance between the different phases.

In particular when the redundant feeds are different phases of a multi-phase power source, it is important for the stability of the powering to maintain balanced phases, i.e. to impose equal or comparable loads on the different phases of the power source. The processor in the DCMU according to the present invention will dynamically transfer servers between the different phases when new or additional servers are taken into operation, or whenever the load imposed by a server changes and the measured change exceeds a certain threshold.

According to a further optional aspect of the invention, defined by claim 7, the processor in the data center management unit is adapted to generate an alert when:
- the first power feed or second power feed becomes unstable; or
- current load induced on the first power feed or second power feed exceeds a threshold;
- the first power feed no longer provides full redundancy for the second power feed, or vice versa; or
- load induced by an individual computer on a power outlet exceeds a threshold.

In other words, the processor in the DCMU according to the present invention preferably also takes disaster preventive measures by alerting the data center operator in certain situations. Such situation may be the detection of an instable power feed, or the point in time where the aggregate or individual current drawn from one of the power feeds by the servers connected to the DCMU exceeds a certain threshold. Also when the first feed no longer has the spare capacity to take over the servers connected to the second feed, or vice versa, it may be useful to inform the data center operator. In the more generic situation with N redundant power feeds, the load of each power feed must be transferrable to the other N-1 power feeds at any point in time. The other N-1 power feeds in other words jointly must have sufficient spare capacity to take over the load. If this is not the case, the power feeds no longer provide full redundancy in case one of them fails, as a result of which the data center operator will have to make a choice which servers or computers to switch off and which servers or computers to transfer to the power feed that survives the failure in order to avoid exceeding the thresholds set for the surviving feeds.

As specified by claim 8, the processor may optionally be adapted to store information related to one or more of the following power supply events:
- power failures;
- micro-interruptions; and
- switches between the first power inlet and the second power inlet, or switching off of power outlets.

The logging of events such as power failures, transfers between power feeds, and micro-interruptions, and parameter values measured before and after such events such as the timing, duration, currents; temperatures, humidity, etc. will assist the DCMU according to the invention to predict when such events may re-appear and to take preventive measures to avoid that these events will re-occur or to reduce their impact on the operation of servers, computers or critical applications running on the servers.

As further specified by claim 9, the parameters logged may comprise:
- time instant of a power supply failure;
- time instant of a micro-interruption;
- time duration of a micro-interruption;
- current load on the first power feed and the second power feed before an after a power supply failure;
- current load on the first power feed and the second power feed before and after a micro-interruption;
- current decrease or current rise measured at a power outlet;
- current drop or current peak measured at a power outlet
- voltage measured on the first power feed and the second power feed;
- the power consumed on the first power feed and the second power feed;
- the energy consumed on the first power feed and the second power feed;
- the power factor on the first power feed and the second power feed;
- total harmonic distortion measured on the first power feed and the second power feed;
- frequency of said the power feed and the second power feed.

Whereas time instant, duration and current load at the occurring of a power feed failure are important parameters that contain useful information for preventing repetitive failures, the set of information that is logged in relation to power feed events is obviously not limited thereby, and may for instance be complemented with measured voltages, phases, power factors, current increase or decrease before and after an event, current drops or peaks before and after an event, consumed power or energy, total harmonic distortion, frequency, ... or environmental parameters such as the temperature, airflow or humidity in the data center room before and after an event.

As is defined by claim 10, the data center management unit according to the invention may optionally comprise memory means for storing one or more long term, short term or start-up parameter values.

Thus, the DCMU according to the invention may perform start-up , short term or long term logging for servers by logging various parameters or events The parameter values may be measured in the DCMU, such as the overall power consumption, the power consumption (in kWh) per outlet, the voltage, the current per outlet, the power factor per outlet, the leakage current per outlet, or may be measured by sensors located in the data center, such as the temperature, the humidity, the airflow, etc. Events may be the number of times, the moments in time, or the time intervals during which a certain situation takes place. Examples of such situations are the crossing of a threshold (upper limit or lower limit) for the overall power consumption, the crossing of a threshold for the power consumption per outlet, the crossing of a threshold for the leakage current per outlet, the crossing of a lower or upper temperature threshold, etc. Logging the parameters or events (or both) and analysis thereof by the DCMU's processor enables to detect abnormalities and to pro-actively shutdown the power outlets where such abnormalities are detected in order to avoid disastrous power outages in the data center (disaster prevention) or to exclude power outlets from rebooting where such abnormalities have been detected after a power failure has taken place (disaster recovery). Start-up logging may for instance include logging the current increase during the first 5 minutes from start-up of the corresponding server. At start-up, the server will typically consume maximal power because processors are running at 100 %, ventilation and hard disks are running at 100 %, etc. The parameter values that are logged at start-up are useful for disaster prevention and disaster recovery later on.

According to a further advantageous aspect defined by claim 11, the processor in the DCMU according to the present invention may further be adapted to generate messages for a higher level power distribution monitoring function in the data center, these messages being indicative for total current load induced on the first power feed and the second power feed. In order to report the total current load induced on a feed, the processor may for instance accumulate the sensed current levels at the power outlets that are connected to that particular feed.

By informing a higher level intelligent function that monitors the power distribution for plural racks, a private room or even the entire data center, the higher level unit can simulate scenarios and guarantee a balanced load across the power feeds taking into account also the load imposed on the power feeds by other DCMUs or racks. If the DCMU according to the present invention transfers a number of output ports from the first feed to the second feed, this may have an impact on other racks, DCMUs or servers that make use of the second power feed. Priorities and measured loads may be taken into account by the higher level unit to instruct shutdown of certain servers or further transfers between power feeds, even in DCMUs that are not directly impacted by the failure or event that triggers preventive or recovery measures. The higher level unit may also schedule transfers or shutdowns across several racks or DCMUs in time, e.g. on instruction of the operator or automatically in case where preventive detection of power failures is implemented, such that the combined impact thereof does not result in unacceptable load peaks on certain power feeds.

Further optionally, as specified by claim 12, the processor may be adapted to receive messages from the higher level power distribution monitoring function in the data center, the messages being indicative for optimal distribution of the power outlets on the first power feed and the second power feed.

Indeed, the higher level central power management function will not only receive information from the DCMUs, but will also inform the DCMUs how the load is best distributed over the different phases or power feeds in order to guarantee optimal uptime.

According to a further optional aspect defined by claim 13, the data center management unit according to the present invention further comprises verification means for verifying if the first power feed and second power feed are redundant feeds, the verification means comprising means for detecting if one or more of the following parameters are equal for the first power feed and the second power feed:
- the phase of the first power feed and second power feed;
- variation in time of the voltage of the first power feed and second power feed on long and short term duration;
- the total harmonic distortion (THD) of the first power feed and second power feed.

In case the phases, and/or the variation in time of the voltages, and/or the THD of the voltages of the first and second power feeds are substantially equal, these power feeds do not represent redundant feeds but actually are feeds that are derived from one and the same power source and phase higher up in the power distribution network. The detection of such non-redundant power feeds is important and may be alerted to the data center operator because dynamically switching the loads between such non-redundant power feeds of a DCMU will not prevent outages.

### Brief Description of the Drawings

Fig. 1 is a functional block scheme of an embodiment of the data center management unit, DCMU or 100, according to the present invention.

### Detailed Description of Embodiment(s)

Fig. 1 shows a data center management unit, DCMU or 100. The DCMU has a first power inlet, IN-A or 101, a second power inlet, IN-B or 102, eight power outlets, OUT or 111, 112, 113, 114, 115, 116, 117 and 118, a processor, PROC or 161, a memory, LOG MEMORY or 162, and five communication ports, 171, 172, 173, 174, 175. The communication ports 171, 172, 173, 174, and 175 are connected to the processor 161 and may represent wired or wireless interfaces such as RS232 ports, Ethernet ports, WiFi ports, etc. Each of the power outlets 111, 112, 113, 114, 115, 116, 117 and 118 is equipped with a current sensor, respectively denoted by I or 121, 122, 123, 124, 125, 126, 127 and 128. The current sensors 121, 122, 123, 124, 125, 126, 127 and 128 are connected to an input of the processor 161. At the first and second power inlets 101 and 102, the DCMU 100 is further equipped with voltage sensors, V-SENSOR or 151 and 152, placed in the power distribution wiring 141 and 142, and connected to an input of the processor 161. The power distribution wiring 141 and 142, represented by bold, black lines in Fig. 1, couples the power outlets 111, 112, 113, 114, 115, 116, 117 and 118 to the power inlets 101 and 102 via respective power switches 131, 132, 133, 134, 135, 136, 137 and 138.

The DCMU 100 drawn in Fig. 1 can distribute power to at most eight connected devices. The power inlets of these eight devices, e.g. servers in a rack of a data center, thereto are connected to the power outlets 111, 112, 113, 114, 115, 116, 117 and 118 of the DCMU 100. By controlling the power switches 131, 132, 133, 134, 135, 136, 137 and 138, the processor 161 controls the distribution of power from the first power inlet 101 and second power inlet 102 to the servers connected to the outlets 111, 112, 113, 114, 115, 116, 117 and 118. When the switch 131 is switched off, the server connected to power outlet 111 is de-activated. When the switch 131 is switched into a second position, the server connected to the power outlet 111 is powered by the first power feed. When the switch 131 is switched into a third position, the server connected to the power outlet 111 is powered by the second power feed. It is noticed that the switch 131 is an intelligent switch that is switched on at zero-crossing of the voltage and switched off at zero-crossing of the current. The current sensor 121 measures the current delivered via outlet 111 in real-time.

The DCMU 100 is remotely configurable and controllable via a network, e.g. the Internet. Via remote management, certain power outlets can be switched on/off, rebooting servers can be scheduled, certain ports on servers, routers, switches can be turned off/on, etc. by the data center operator without disposing a technician to the data center. The network connectivity is realized through one of the communication ports drawn in Fig. 1, e.g. 175. The communication port 175 might for instance be an RJ45 connector that will be connected via one or more firewalls and/or routers to the Internet or an Intranet, and enable the data center operator to remotely manage and control the power distribution from a PC with network connectivity. The DCMU 100 in Fig. 1 further features four additional communication ports 171, 172, 173 and 174 for connectivity with the data center operator or for connectivity with computers, servers, routers, etc. in the data center. These communication ports can for instance be RS232 ports used to directly control various hardware functions, like switching on/off relays, ports, ventilation, heating, temperature sensors, etc. It is noticed that various alternatives exist for RS232 (Recommended Standard 232) like for instance IPMI (Intelligent Platform Management Interface), USB (Universal Serial Bus), I²C (Inter-Integrated Circuit), SPI (Serial Peripheral Interface), etc.

The first power inlet 101 is connected to a first power feed, the second power inlet 102 is connected to a second power feed. The first and the second power feeds may correspond to the same phase or different phases of a multi-phase power source. One of them, e.g. IN-A, may be a protected power feed, e.g. an Uninterruptable Power Source or UPS that switches to a generator in case of a power failure. The second one may also be protected or may be an unprotected power feed.

The processor 161 in DCMU 100 determines for each power outlet 111, 112, 113, 114, 115, 116, 117 and 118 individually if it will be connected to the first power feed, to the second power feed, or if it will be switched off. In doing so, the processor 161 takes into account the quality of the power feeds, e.g. the stability of the first and second power feeds, the load imposed by the servers connected to the different power outlets 111, 112, 113, 114, 115, 116, 117 and 118, the priorities assigned to these servers and the criticality of the applications running on these servers. The processor 161 also attempts to maintain load balance between the different feeds, and ensures that the power feeds provide mutual redundancy in case of a power failure for at least the critical servers or applications. In other words, the processor 161 makes sure that the second power feed can take over the feeding of all critical servers connected to the first power feed and the first power feed can take over the feeding of all critical servers connected to the second power feed at any point in time If this is no longer the case, the processor 161 will alert the data center operator.

The priorities may be assigned to the servers at installation and are configured by the data center operator. Apart from the server priorities, the processor 161 receives measured current values from the current sensors 121, 122, 123, 124, 125, 126, 127 and 128. These current values represent the loads imposed by the servers on the power feeds. The processor 161 further also receives the sensed voltage values from the sensors 151 and 152 in respectively the first power feed and second power feed. When the load imposed by a server and measured through the corresponding current sensor exceeds a certain threshold, the processor 161 may consider switching off the output port or transferring the output port to another power feed. Similarly, when the aggregate load imposed on a power feed exceeds a certain threshold, the processor 161 may decide to switch low priority servers connected to that power feed off, or may decide to transfer one or more output ports to a different power feed. In deciding which output ports will be transferred to a different power feed, the processor 161 takes into account the priorities of the servers and the stability of the respective feeds, sensed via the voltage sensors 151 and 152. Indeed, high priority servers will preferably be allocated to the most stable power feed, whereas low priority servers can be switched off or connected to a power feed that is less balanced and/or unprotected.

When the processor 161 transfers an output port from one power feed to another or when the processor 161 switches off an output port, the processor 161 stores related parameter values in the log memory 162. These parameters may be the time instant whereon a transfer takes place, the duration of a micro-interruption, the load current drawn by the server that is transferred from one power feed to another, the aggregate load imposed by the DCMU on the different power feeds, the sensed voltages in the first power feed and second power feed, etc. In addition, certain environmental parameter values sensed before and after an event may be stored in the log memory 162 when available. These environmental parameters may contain but are not limited to the temperature in the data center, the airflow sensed, the humidity. As a result of the storage, the processor 161 will be able to perform trends analysis and take preventive measures in the load distribution on the different power feeds as soon as certain events occur.

The transfer of an output port from one power feed to another, and the logged parameter values may also be communicated by the DCMU 100 to a higher level function in the data center. Such higher level function may simulate scenario's and ensure that load balanced is maintained at rack, private room or data center level. The switching of an output port from the first in-feed 101 to the second in-feed 102 indeed may have an impact on other servers or racks that make use of the second in-feed. Their redundant powering may no longer be guaranteed and/or their powering may become more unstable.

When plural output ports have to be transferred from one feed to another feed, the processor 161 shall preferably spread the transfers in time to avoid peaks in the load on a feed as a result of simultaneous switching of several servers.

Although the present invention has been illustrated by reference to a specific embodiment illustrated by Fig. 1, it will be apparent to those skilled in the art of deigning PDUs that the invention is not limited to the details of the foregoing illustrative embodiment, and that the present invention may be embodied with various changes and modifications without departing from the scope thereof. In particular, the invention is not restricted to a particular number of feeds and may equally be implemented with three, four, five or more redundant feeds. The present embodiment is therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A data center management unit (DCMU, 100) for managing and controlling power distribution to computers in a data center, said data center management unit (DCMU, 100) comprising:
- a first power inlet (IN-A, 101) for connectivity to a first power feed;
- a second power inlet (IN-B, 102) for connectivity to a second power feed;
- a plurality of power outlets (111, 112, 113, 114, 115, 116, 117, 118) for providing power to respective ones of said computers; and
- a processor (PROC, 161),
wherein
- said data center management unit (DCMU, 100) further comprises a plurality of power switches (131, 132, 133, 134, 135, 136, 137, 138) each having a first input coupled to said first power inlet (IN-A, 101) and a second input coupled to said second power inlet (IN-B, 102), said plurality of power switches (131, 132, 133, 134, 135, 136, 137, 138) having outputs coupled to respective ones of said plurality of power outlets (111, 112, 113, 114, 115, 116, 117, 118); and
- said processor (PROC, 161) is adapted to control said plurality of power switches (131, 132, 133, 134, 135, 136, 137, 138) for dynamically switching individual power outlets of said plurality of power outlets (111, 112, 113, 114, 115, 116, 117, 118) between said first power inlet (IN-A) and said second power inlet (IN-B) or vice versa, and for dynamically switching off individual power outlets of said plurality of power outlets (111, 112, 113, 114, 115, 116, 117, 118).

2. A data center management unit (DCMU, 100) according to claim 1, wherein:
- said processor (PROC, 161) is further adapted to control said plurality of power switches (131, 132, 133, 134, 135, 136, 137, 138) based on quality of said first power feed and said second power feed.

3. A data center management unit (DCMU, 100) according to claim 2, wherein said quality of said first power feed and said second power feed depends on one or more of the following parameters:
- individual load of said first power feed and said second power feed;
- variation in time of the voltage of said first power feed and said second power feed;
- total harmonic distortion of the voltage of said first power feed and said second power feed;
- the power factor of each individual load;
- current of each individual load;
- variation in time of the current of each individual load on said first power feed and said second power feed;
- total harmonic distortion of the current of each individual load on said first power feed and said second power feed;
- the power factor of said first power feed and said second power feed;
- total current on said first power feed and said second power feed;
- variation in time of the total current on said first power feed and said second power feed;
- total harmonic distortion of the total current on said first power feed and said second power feed;
- number of micro-interruptions of said first power feed and said second power feed;
- length of micro-interruptions of said first power feed and said second power feed;
- number of outages of said first power feed and said second power feed;
- connectivity of said first power feed and said second power feed to an Uninterruptable Power Source (UPS);
- ratio of actual load versus maximum allowable load of said first power feed and said second power feed.

4. A data center management unit (DCMU, 100) according to claim 1, wherein:
- said processor (PROC, 161) is adapted to receive information indicative for priorities associated with said computers; and
- said processor (PROC, 161) is further adapted to control said plurality of power switches (131, 132, 133, 134, 135, 136, 137, 138) based on said priorities of said computers.

5. A data center management unit (DCMU, 100) according to claim 1, wherein:
- said data center management unit (DCMU, 100) further comprises a plurality of current sensors (121, 122, 123, 124, 125, 126, 127, 128) coupled to respective ones of said plurality of power outlets (111, 112, 113, 114, 115, 116, 117, 118) for sensing current loads induced by said computers; and
- said processor (PROC, 161) is further adapted to control said plurality of power switches (131, 132, 133, 134, 135, 136, 137, 138) based on said current loads induced by said computers.

6. A data center management unit (DCMU, 100) according to claim 1, wherein:
- said first power feed and said second power feed represent different phases of a multi-phase power supply; and
- said processor (PROC, 161) is further adapted to control said plurality of power switches (13.1, 132, 133, 134, 135, 136, 137, 138) based on balance between said different phases.

7. A data center management unit (DCMU, 100) according to claim 1, wherein said processor (PROC, 161) is further adapted to generate an alert when:
- said first power feed or said second power feed becomes unstable; or
- current load induced on said first power feed or said second power feed exceeds a threshold;
- said first power feed no longer provides full redundancy for said second power feed, or vice versa; or
- load induced by an individual computer on a power outlet exceeds a threshold.

8. A data center management unit (DCMU, 100) according to claim 1, wherein said processor (PROC, 161) is further adapted to store information related to one or more of the following power supply events:
- power failures;
- micro-interruptions;
- switches between said first power inlet (IN-A) and said second power inlet (IN-B) or switching off of power outlets.

9. A data center management unit (DCMU, 100) according to claim 8, wherein said information comprises:
- time instant of a power supply failure;
- time instant of a micro-interruption;
- time duration of a micro-interruption;
- current load on said first power feed and said second power feed before and after a power supply failure;
- current load on said first power feed and said second power feed before and after a micro-interruption;
- current decrease or current rise measured at a power outlet;
- current drop or current peak measured at a power outlet;
- voltage measured on said first power feed and said second power feed;
- the power consumed on said first power feed and said second power feed;
- the energy consumed on said first power feed and said second power feed;
- the power factor on said first power feed and said second power feed;
- total harmonic distortion measured on said first power feed and said second power feed;
- frequency of said first power feed and said second power feed.

10. A data center management unit (DCMU, 100) according to claim 1,
said data center management unit (DCMU, 100) further comprising memory means for storing one or more long term, short term or start-up parameter values.

11. A data center management unit (DCMU, 100) according to claim 1, wherein said processor (PROC, 161) is further adapted to generate messages for a higher level power distribution monitoring function in said data center, said messages being indicative for total current load induced on said first power feed and said second power feed.

12. A data center management unit (DCMU, 100) according to claim 11, wherein said processor (PROC, 161) is further adapted to receive messages from said higher level power distribution monitoring function in said data center, said messages being indicative for optimal distribution of said power outlets (111, 112, 113, 114, 115, 116, 117, 118) on said first power feed and said second power feed.

13. A data center management unit (DCMU, 100) according to claim 1, further comprising verification means for verifying if said first power feed and said second power feed are redundant feeds, said verification means comprising means for detecting if one or more of the following parameters are equal for said first power feed and said second power feed:
- the phase of said first power feed and said second power feed;
- variation in time of the voltage of said first power feed and said second power feed on long and short term duration;
- the total harmonic distortion of said first power feed and said second power feed.

14. A method for managing and controlling power distribution to computers in a data center through a data center management unit (DCMU, 100), said method comprising:
- connecting a first power inlet (IN-A, 101) of said data center management unit (DCMU, 100) to a first power feed;
- connecting a second power inlet (IN-B, 102) of said data center management unit (DCMU, 100) to a second power feed;
- connecting said computers to a plurality of power outlets (111, 112, 113, 114, 115, 116, 117, 118) for providing power to respective ones of said computers; and wherein said method further comprises:
- dynamically switching individual power outlets of said plurality of power outlets (111, 112, 113, 114, 115, 116, 117, 118) between said first power inlet (IN-A) and said second power inlet (IN-B) or vice versa, and dynamically switching off individual power outlets of said plurality of power outlets (111, 112, 113, 114, 115, 116, 117, 118).

## Patentansprüche

1. Datenzentralverwaltungseinheit (DCMU, 100) zur Verwaltung und Steuerung der Leistungsverteilung an Computer in einem Datenzentrum, wobei die Datenzentralverwaltungseinheit (DCMU, 100) Folgendes umfasst:
- einen ersten Leistungseingang (IN-A, 101) für die Konvektivität mit einer ersten Leistungsversorgung;
- einen zweiten Leistungseingang (IN-B, 102) für die Konvektivität mit einer zweiten Leistungsversorgung;
- eine Vielzahl von Steckdosen (111, 112, 113, 114, 115, 116, 117, 118) zur Bereitstellung von Leistung an Entsprechende der Computer; und
- einen Prozessor (PROC, 161),
wobei
- die Datenzentralverwaltungseinheit (DCMU, 100) weiter eine Vielzahl von Leistungsschaltern (131, 132, 133, 134, 135, 136, 137, 138) umfasst, die jeweils einen ersten Eingang aufweisen, der mit dem ersten Leistungseingang (IN-A, 101) gekoppelt ist, und einen zweiten Eingang, der mit dem zweiten Leistungseingang (IN-B, 102) gekoppelt ist, wobei die Vielzahl von Leistungsschaltern (131, 132, 133, 134, 135, 136, 137, 138) Ausgänge aufweist, die mit den Entsprechenden der Vielzahl von Steckdosen (111, 112, 113, 114, 115, 116, 117, 118) gekoppelt sind; und
- der Prozessor (PROC, 161) ausgelegt ist, um die Vielzahl von Leistungsschaltern (131, 132, 133, 134, 135, 136, 137, 138) zu steuern, um einzelne Steckdosen der Vielzahl von Steckdosen (111, 112, 113, 114, 115, 116, 117, 118) dynamisch zwischen dem ersten Leistungseingang (IN-A) und dem zweiten Leistungseingang (IN-B) oder umgekehrt zu schalten, und um einzelne Steckdosen der Vielzahl von Steckdosen (111, 112, 113, 114, 115, 116, 117, 118) dynamisch abzuschalten.

2. Datenzentralverwaltungseinheit (DCMU, 100) nach Anspruch 1, wobei:
- der Prozessor (PROC, 161) weiter ausgelegt ist, um die Vielzahl von Leistungsschaltern (131, 132, 133, 134, 135, 136, 137, 138) basierend auf der Qualität der ersten Leistungsversorgung und der zweiten Leistungsversorgung zu steuern.

3. Datenzentralverwaltungseinheit (DCMU, 100) nach Anspruch 2, wobei die Qualität der ersten Leistungsversorgung und der zweiten Leistungsversorgung von einem oder mehreren der folgenden Parameter abhängt:
- einzelne Last der ersten Leistungsversorgung und der zweiten Leistungsversorgung;
- Zeitschwankung der Spannung der ersten Leistungsversorgung und der zweiten Leistungsversorgung;
- gesamte harmonische Verzerrung der Spannung der ersten Leistungsversorgung und der zweiten Leistungsversorgung;
- Leistungsfaktor jeder einzelnen Last;
- Strom jeder einzelnen Last;
- Zeitschwankung des Stroms jeder einzelnen Last auf der ersten Leistungsversorgung und der zweiten Leistungsversorgung;
- gesamte harmonische Verzerrung des Stroms jeder einzelnen Last auf der ersten Leistungsversorgung und der zweiten Leistungsversorgung;
- Leistungsfaktor der ersten Leistungsversorgung und der zweiten Leistungsversorgung;
- gesamter Strom auf der ersten Leistungsversorgung und der zweiten Leistungsversorgung;
- Zeitschwankung des gesamten Stroms auf der ersten Leistungsversorgung und der zweiten Leistungsversorgung;
- gesamte harmonische Verzerrung des gesamten Stroms auf der ersten Leistungsversorgung und der zweiten Leistungsversorgung;
- Anzahl der Mikrounterbrechungen der ersten Leistungsversorgung und der zweiten Leistungsversorgung;
- Länge der Mikrounterbrechungen der ersten Leistungsversorgung und der zweiten Leistungsversorgung;
- Anzahl der Ausfälle der ersten Leistungsversorgung und der zweiten Leistungsversorgung;
- Konvektivität der ersten Leistungsversorgung und der zweiten Leistungsversorgung an eine unterbrechungsfreie Stromversorgung (USV);
- Verhältnis zwischen der tatsächlichen Last und der zulässigen maximalen Last der ersten Leistungsversorgung und der zweiten Leistungsversorgung.

4. Datenzentralverwaltungseinheit (DCMU, 100) nach Anspruch 1, wobei:
- der Prozessor (PROC, 161) ausgelegt ist, um Informationen zu empfangen, die Prioritäten angeben, die mit den Computern assoziiert sind; und
- der Prozessor (PROC, 161) weiter ausgelegt ist, um die Vielzahl von Leistungsschaltern (131, 132, 133, 134, 135, 136, 137, 138) basierend auf den Prioritäten der Computer zu steuern.

5. Datenzentralverwaltungseinheit (DCMU, 100) nach Anspruch 1, wobei:
- die Datenzentralverwaltungseinheit (DCMU, 100) weiter eine Vielzahl von Stromsensoren (121, 122, 123, 124, 125, 126, 127, 128) umfasst, die mit Entsprechenden der Vielzahl von Steckdosen (111, 112, 113, 114, 115, 116, 117, 118) zur Messung der Stromlasten, die durch die Computer induziert werden, gekoppelt sind; und
- der Prozessor (PROC, 161) weiter ausgelegt ist, um die Vielzahl von Leistungsschaltern (131, 132, 133, 134, 135, 136, 137, 138) basierend auf den Stromlasten, die durch die Computer induziert werden, zu steuern.

6. Datenzentralverwaltungseinheit (DCMU, 100) nach Anspruch 1, wobei:
- die erste Leistungsversorgung und die zweite Leistungsversorgung verschiedene Phasen einer mehrphasigen Leistungsversorgung darstellen; und
- der Prozessor (PROC, 161) weiter ausgelegt ist, um die Vielzahl von Leistungsschaltern (131, 132, 133, 134, 135, 136, 137, 138) basierend auf einem Gleichgewicht zwischen den verschiedenen Phasen zu steuern.

7. Datenzentralverwaltungseinheit (DCMU, 100) nach Anspruch 1, wobei der Prozessor (PROC, 161) weiter ausgelegt ist, um einen Alarm zu erzeugen, wenn:
- die erste Leistungsversorgung oder die zweite Leistungsversorgung instabil wird; oder
- die Stromlast, die in die erste Leistungsversorgung oder die zweite Leistungsversorgung induziert wird, eine Schwelle übersteigt;
- die erste Leistungsversorgung der zweiten Leistungsversorgung keine vollständige Redundanz mehr bereitstellt, oder ungekehrt; oder
- die Last, die von einem einzelnen Computer einer Steckdose induziert wird, eine Schwelle übersteigt.

8. Datenzentralverwaltungseinheit (DCMU, 100) nach Anspruch 1, wobei der Prozessor (PROC, 161) weiter ausgelegt ist, um Informationen mit Bezug auf eines oder mehrere der folgenden Leistungsversorgungsereignisse zu speichern:
- Leistungsausfälle;
- Mikrounterbrechungen;
- Schalter zwischen dem ersten Leistungseingang (IN-A) und dem zweiten Leistungseingang (IN-B) oder Abschaltung von Steckdosen.

9. Datenzentralverwaltungseinheit (DCMU, 100) nach Anspruch 8, wobei die Informationen Folgendes umfassen:
- Zeitpunkt eines Leistungsversorgungsausfalls;
- Zeitpunkt einer Mikrounterbrechung;
- Dauer einer Mikrounterbrechung;
- Stromlast auf der ersten Leistungsversorgung und der zweiten Leistungsversorgung vor und nach dem Leistungsversorgungsausfall;
- Stromlast auf der ersten Leistungsversorgung und der zweiten Leistungsversorgung vor und nach der Mikrounterbrechung;
- Stromabfall und Stromanstieg, gemessen an einer Steckdose;
- Stromeinbruch und Stromspitze, gemessen an einer Steckdose;
- Spannung, gemessen auf der ersten Leistungsversorgung und der zweiten Leistungsversorgung;
- Leistung, verbraucht auf der ersten Leistungsversorgung und der zweiten Leistungsversorgung;
- Energie, verbraucht auf der ersten Leistungsversorgung und der zweiten Leistungsversorgung;
- Leistungsfaktor auf der ersten Leistungsversorgung und der zweiten Leistungsversorgung;
- gesamte harmonische Verzerrung, gemessen auf der ersten Leistungsversorgung und der zweiten Leistungsversorgung;
- Frequenz der ersten Leistungsversorgung und der zweiten Leistungsversorgung.

10. Datenzentralverwaltungseinheit (DCMU, 100) nach Anspruch 1, wobei die Datenzentralverwaltungseinheit (DCMU, 100) weiter Speichermittel umfasst, um einen oder mehrere langfristige, kurzfristige oder Anfahr-Parameterwerte zu speichern.

11. Datenzentralverwaltungseinheit (DCMU, 100) nach Anspruch 1, wobei der Prozessor (PROC, 161) weiter ausgelegt ist, um Meldungen für eine Leistungsverteilungs-Überwachungsfunktion auf höherer Ebene in dem Datenzentrum zu erzeugen, wobei diese Meldungen die gesamte Stromlast angeben, die auf die erste Leistungsversorgung und die zweite Leistungsversorgung induziert wird.

12. Datenzentralverwaltungseinheit (DCMU, 100) nach Anspruch 11, wobei der Prozessor (PROC, 161) weiter ausgelegt ist, um Meldungen aus der Leistungsverteilungs-Überwachungsfunktion auf höherer Ebene in dem Datenzentrum zu erhalten, wobei die Meldungen die optimale Verteilung der Steckdosen (111, 112, 113, 114, 115, 116, 117, 118) auf der ersten Leistungsversorgung und der zweiten Leistungsversorgung angeben.

13. Datenzentralverwaltungseinheit (DCMU, 100) nach Anspruch 1, weiter umfassend Überprüfungsmittel, um zu überprüfen, ob die erste Leistungsversorgung und der zweite Leistungsversorgung redundante Versorgungen sind; wobei die Versorgungsmittel Mittel umfassen, um nachzuweisen, ob einer oder mehrere der folgenden Parameter für die erste Leistungsversorgung und die zweite Leistungsversorgung gleich sind;
- die Phase der ersten Leistungsversorgung und der zweiten Leistungsversorgung;
- Zeitschwankung der Spannung der ersten Leistungsversorgung und der zweiten Leistungsversorgung bei lang- und kurzfristiger Dauer;
- die gesamte harmonische Verzerrung der ersten Leistungsversorgung und der zweiten Leistungsversorgung.

14. Verfahren zur Verwaltung und Kontrolle der Leistungsverteilung an Computer in einem Datenzentrum durch eine Datenzentralverwaltungseinheit (DCMU, 100), wobei das Verfahren Folgendes umfasst:
- Verbindung eines ersten Leistungseingangs (IN-A, 101) der Datenzentralverwaltungseinheit (DCMU, 100) mit einer ersten Leistungsversorgung;
- Verbindung eines zweiten Leistungseingangs (IN-A, 102) der Datenzentralverwaltungseinheit (DCMU, 100) mit einer zweiten Leistungsversorgung;
- Verbindung der Computer mit einer Vielzahl von Steckdosen (111, 112, 113, 114, 115, 116, 117, 118) zur Bereitstellung von Leistung an die Entsprechenden der Computer; und wobei das Verfahren weiter Folgendes umfasst:
- dynamische Schaltung von einzelnen Steckdosen der Vielzahl von Steckdosen (111, 112, 113, 114, 115, 116, 117, 118) zwischen dem ersten Leistungseingang (IN-A) und dem zweiten Leistungseingang (IN-B) oder umgekehrt, und dynamische Abschaltung von einzelnen Steckdosen der Vielzahl von Steckdosen (111, 112, 113, 114, 115, 116, 117, 118).

## Revendications

1. Unité de gestion de centre de données (DCMU, 100) permettant de gérer et de commander la distribution de puissance vers les ordinateurs dans un centre de données, ladite unité de gestion de centre de données (DCMU, 100) comprenant .
- une première entrée d'alimentation (IN-A, 101) destinée à la connectivité vers une première alimentation en énergie ;
- une seconde entrée d'alimentation (IN-B, 102) destinée à la connectivité vers une seconde alimentation en énergie ;
- une pluralité de sorties électriques (111, 112, 113, 114, 115, 116, 117, 118) permettant d'alimenter en énergie les ordinateurs respectifs parmi lesdits ordinateurs ; et
- un processeur (PROC, 161),
dans laquelle
- ladite unité de gestion de centre de données (DCMU, 100) comprend en outre une pluralité d'interrupteurs d'alimentation (131, 132, 133, 134, 135, 136, 137, 138) ayant chacun une première entrée couplée à ladite première entrée d'alimentation (IN-A, 101) et une seconde entrée couplée à ladite seconde entrée d'alimentation (IN-B, 102), ladite pluralité d'interrupteurs d'alimentation (131, 132, 133, 134, 135, 136, 137, 138) ayant des sorties couplées aux sorties électriques respectives de ladite pluralité de sortie électrique (111, 112, 113, 114, 115, 116, 117, 118) ; et
- ledit processeur (PROC, 161) est adapté pour commander ladite pluralité d'interrupteurs d'alimentation (131, 132, 133, 134, 135, 136, 137, 138) pour commuter dynamiquement les sorties électriques individuelles de ladite pluralité de sorties électriques (111, 112, 113, 114, 115, 116, 117, 118) entre ladite première entrée d'alimentation (IN-A) et ladite seconde entrée d'alimentation (IN-B) ou vice-versa, et pour désactiver dynamiquement les sorties électriques individuelles de ladite pluralité de sorties électriques (111, 112, 113, 114, 115, 116, 117, 118).

2. Unité de gestion de centre de données (DCMU, 100) selon la revendication 1, dans laquelle :
- ledit processeur (PROC, 161) est en outre adapté pour commander ladite pluralité d'interrupteurs d'alimentation (131, 132, 133, 134, 135, 136, 137, 138) sur base de la qualité de ladite première alimentation en énergie et de ladite seconde alimentation en énergie.

3. Unité de gestion de centre de données (DCMU, 100) selon la revendication 2, dans laquelle ladite qualité de ladite première alimentation en énergie et de ladite seconde alimentation en énergie dépend d'un ou plusieurs des paramètres suivants :
- la charge individuelle de ladite première alimentation en énergie et de ladite seconde alimentation en énergie ;
- la variation dans le temps de la tension de ladite première alimentation en énergie et de ladite seconde alimentation en énergie ;
- la distorsion harmonique totale de la tension de ladite première alimentation en énergie et de ladite seconde alimentation en énergie ;
- le facteur de puissance de chaque charge individuelle ;
- l'intensité de chaque charge individuelle ;
- la variation dans le temps de l'intensité de chaque charge individuelle sur ladite première alimentation en énergie et ladite seconde alimentation en énergie ;
- la distorsion harmonique totale de l'intensité de chaque charge individuelle sur ladite première alimentation en énergie et ladite seconde alimentation en énergie ;
- le facteur de puissance de ladite première alimentation en énergie et de ladite seconde alimentation en énergie ;
- l'intensité totale de ladite première alimentation en énergie et de ladite seconde alimentation en énergie ;
- la variation dans le temps de l'intensité totale sur ladite première alimentation en énergie et ladite seconde alimentation en énergie ;
- la distorsion harmonique totale de l'intensité totale sur ladite première alimentation en énergie et ladite seconde alimentation en énergie ;
- le nombre de micro-coupures de ladite première alimentation en énergie et de ladite seconde alimentation en énergie ;
- la longueur des micro-coupures de ladite première alimentation en énergie et de ladite seconde alimentation en énergie ;
- le nombre de coupures de ladite première alimentation en énergie et de ladite seconde alimentation en énergie ;
- la connectivité de ladite première alimentation en énergie et de ladite seconde alimentation en énergie à un onduleur (UPS) ;
- le rapport de la charge effective par rapport à la charge maximale autorisée de ladite première alimentation en énergie et de ladite seconde alimentation en énergie.

4. Unité de gestion de centre de données (DCMU, 100) selon la revendication 1, dans laquelle :
- ledit processeur (PROC, 161) est adapté pour recevoir des informations indicatives de priorités associées auxdits ordinateurs ; et
- ledit processeur (PROC, 161) est en outre adapté pour commander ladite pluralité d'interrupteurs d'alimentation (131, 132, 133, 134, 135, 136, 137, 138) sur base desdites priorités desdits ordinateurs.

5. Unité de gestion de centre de données (DCMU, 100) selon la revendication 1, où :
- ladite unité de gestion de centre de données (DCMU, 100) comprend en outre une pluralité de capteurs de courant (121, 122, 123, 124, 125, 126, 127, 128) couplés aux sorties électriques respectives de ladite pluralité de sorties électriques (111, 112, 113, 114, 115, 116, 117, 118) pour détecter les charges de courant induites par lesdits ordinateurs ; et
- ledit processeur (PROC, 161) est en outre adapté pour commander ladite pluralité d'interrupteurs d'alimentation (131, 132, 133, 134, 135, 136, 137, 138) sur base desdites charges de courant induites par lesdits ordinateurs.

6. Unité de gestion de centre de données (DCMU, 100) selon la revendication 1, dans laquelle :
- ladite première alimentation en énergie et ladite seconde alimentation en énergie représentent différentes phases d'une alimentation multiphase ; et
- ledit processeur (PROC, 161) est en outre adapté pour commander ladite pluralité d'interrupteurs d'alimentation (131, 132, 133, 134, 135, 136, 137, 138) sur base de l'équilibrage entre lesdites différentes phases.

7. Unité de gestion de centre de données (DCMU, 100) selon la revendication 1, dans laquelle ledit processeur (PROC, 161) est en outre adapté pour générer une alerte lorsque :
- ladite première alimentation en énergie ou ladite seconde alimentation en énergie devient instable ; ou
- la charge de courant induite sur ladite première alimentation en énergie ou ladite seconde alimentation en énergie dépasse un seuil ;
- ladite première alimentation en énergie n'assure plus de redondance complète pour ladite seconde alimentation en énergie, ou vice-versa ; ou
- la charge induite par un ordinateur individuel sur une sortie électrique dépasse un seuil.

8. Unité de gestion de centre de données (DCMU, 100) selon la revendication 1, dans laquelle ledit processeur (PROC, 161) est en outre adapté pour stocker des informations se rapportant à un ou plusieurs des événements d'alimentation suivants :
- des pannes de courant ;
- des micro-coupures ;
- des commutations entre ladite première entrée d'alimentation (IN-A) et ladite seconde entrée d'alimentation (IN-B) ou une désactivation des sorties électriques.

9. Unité de gestion de centre de données (DCMU, 100) selon la revendication 8, dans laquelle ladite information comprend :
- le moment d'une panne d'alimentation ;
- le moment d'une micro-coupure ;
- la durée d'une micro-coupure ;
- la charge de courant sur ladite première alimentation en énergie et ladite seconde alimentation en énergie avant et après une panne d'alimentation ;
- la charge de courant sur ladite première alimentation en énergie et ladite seconde alimentation en énergie avant et après une micro-coupure ;
- une diminution d'intensité ou une augmentation d'intensité mesurée à une sortie électrique ;
- une chute ou un pic d'intensité mesuré à une sortie électrique ;
- une tension mesurée sur ladite première alimentation en énergie et ladite seconde alimentation en énergie ;
- la puissance consommée sur ladite première alimentation en énergie et ladite seconde alimentation en énergie ;
- l'énergie consommée sur ladite première alimentation en énergie et ladite seconde alimentation en énergie ;
- le facteur de puissance sur ladite première alimentation en énergie et ladite seconde alimentation en énergie ;
- la distorsion harmonique totale mesurée sur ladite première alimentation en énergie et ladite seconde alimentation en énergie ;
- la fréquence de ladite première alimentation en énergie et de ladite seconde alimentation en énergie ;

10. Unité de gestion de centre de données (DCMU, 100) selon la revendication 1, ladite unité de gestion de centre de données (DCMU, 100) comprenant en outre un moyen de mémoire destiné au stockage d'une ou plusieurs valeurs de paramètre à long terme, à court terme ou de démarrage.

11. Unité de gestion de centre de données (DCMU, 100) selon la revendication 1, dans laquelle ledit processeur (PROC, 161) est en outre adapté pour générer des messages pour une fonction de surveillance de distribution d'alimentation de plus haut niveau dans ledit centre de données, lesdits messages étant indicatifs de la charge de courant totale induite sur ladite première alimentation en énergie et ladite seconde alimentation en énergie.

12. Unité de gestion de centre de données (DCMU, 100) selon la revendication 11, dans laquelle ledit processeur (PROC, 161) est en outre adapté pour recevoir des messages de ladite fonction de surveillance de distribution d'alimentation de plus haut niveau dans ledit centre de données, lesdits messages étant indicatifs d'une distribution optimale desdites sorties électriques (111, 112, 113, 114, 115, 116, 117, 118) sur ladite première alimentation en énergie et ladite seconde alimentation en énergie.

13. Unité de gestion de centre de données (DCMU, 100) selon la revendication 1, comprenant en outre un moyen de vérification permettant de vérifier si ladite première alimentation en énergie et ladite seconde alimentation en énergie sont des alimentations redondantes, ledit moyen de vérification comprenant un moyen pour détecter si un ou plusieurs des paramètres suivants sont égaux pour ladite première alimentation en énergie et ladite seconde alimentation en énergie .
- la phase de ladite première alimentation en énergie et de ladite seconde alimentation en énergie ;
- la variation dans le temps de la tension de ladite première alimentation en énergie et de ladite seconde alimentation en énergie sur une durée à long et à court terme ;
- la distorsion harmonique totale de ladite première alimentation en énergie et de ladite seconde alimentation en énergie.

14. Procédé de gestion et de commande de la distribution de puissance vers des ordinateurs dans un centre de données au moyen d'une unité de gestion de centre de données (DCMU, 100), ledit procédé comprenant :
- le raccordement d'une première entrée d'alimentation (IN-A, 101) de ladite unité de gestion de centre de données (DCMU, 100) à une première alimentation en énergie ;
- le raccordement d'une seconde entrée d'alimentation (IN-B, 102) de ladite unité de gestion de centre de données (DCMU, 100) à une seconde alimentation en énergie ;
- le raccordement desdits ordinateurs à une pluralité de sorties électriques (111, 112, 113, 114, 115, 116, 117, 118) permettant d'alimenter en énergie les ordinateurs respectifs parmi lesdits ordinateurs ; et, où ledit procédé comprend en outre :
- la commutation dynamique des sorties électriques individuelles de ladite pluralité de sorties électriques (111, 112, 113, 114, 115, 116, 117, 118) entre ladite première entrée d'alimentation (IN-A) et ladite seconde entrée d'alimentation (IN-B) ou vice-versa, et la désactivation dynamique des sorties électriques individuelles de ladite pluralité de sorties électriques (111, 112, 113, 114, 115, 116, 117, 118).
